# EUROPEAN PATENT APPLICATION

(11) **EP 0 801 034 A2**
(43) Date of publication of application: **15.10.1997**
(21) Application number: 97830058.0
(22) Date of filing: 13.02.1997
(51) Int. Cl.: C02F 3/28

(54) **Anaerobic system for processing waste water**

(30) Priority: 13.02.1996 IT MI960111 U
(71) Applicant: Isea S.r.l. Societa Italiana Energia Ambiente, 29100 Piacenza (IT)
(72) Inventor: Bernini, Giuseppe, 29100 Piacenza (IT)
(74) Representative: Cicogna, Franco

(57) **Abstract**

The present invention relates to an anaerobic system for processing waste water, the main feature thereof is that the system comprises a weldless polyethylene outer tank in the inside of which is arranged a weldless polyethylene inner tank, which is provided with an edge which can be butt engaged on an abutment defined by the outer tank.

The inner tank communicates with a liquid delivery duct and outlet duct and is provided with a cone-shaped bottom with an outlet opening for discharging the sediments toward the bottom of the outer tank.

## Description

### BACKGROUND OF THE INVENTION

The present invention relates to an anaerobic system for processing waste water.

As is known, the biologic pits of the so-called Imhoff type are generally constituted by an outer vessel or digesting vessel, in the inside of which is arranged an inner vessel, or sedimenting vessel, communicating with a waste water inlet duct and with an outlet sewage duct.

The sedimenting vessel, in particular, is provided with an opening through the bottom thereof, allowing the solid residues to deposit on the outer vessel.

These prior systems have generally a purifying efficiency which is comparatively low, because of a not proper separation of the sedimenting and digesting steps.

In fact, the mentioned systems are conventionally made of a concrete material which has a very high weight and compels the installation operator to use mechanical means; moreover this material does not provide a perfect tightness of the tanks since the tanks are made by sectors coupled to one another by cement based materials which are susceptible to a chemical and mechanical attack by the liquid materials contained therein.

This causes a danger of an overflowing of the contained material to the outside with a great environmental pollution risk.

Other solutions using a polyester material reinforced by glass fibers are very expensive because of their constructional method and, moreover, are very dangerous for the operators.

Moreover these solutions have a poor reliability since they have a comparatively low mechanical strength and can be easily broken during the installation thereof, with possible leakages which can be detected only with difficulties thereby negatively affecting the efficiency of the overall system.

### SUMMARY OF THE INVENTION

Accordingly, the aim of the present invention is to overcome the above mentioned drawback, by providing an anaerobic system for processing waste water which can be constructed on an industrial scale, while providing very great mechanical stability characteristics.

Within the scope of the above mentioned aim, a main object of the present invention is to provide article of manufactures having very good tightness characteristics and which can be also stored outside, since they will hold unaltered the time their physical, chemical and mechanical properties.

Another object of the present invention is to provide such a waste water processing system which can be made on an industrial scale starting from a recycled and recyclable material, while providing the operator with the possibility of working in a very safe environment.

Yet another object of the present invention is to provide such a waste water processing system which can be easily made starting from easily commercially available elements and materials and which, moreover, is very competitive from a mere economic standpoint.

According to one aspect of the present invention, the above mentioned aim and objects, as well as yet other objects, which will become more apparent hereinafter, are achieved by an anaerobic system for processing waste water, characterized in that said system comprises an outer tank, made of a weldless polyethylene material, in which is arranged an inner tank also made of a weldless polyethylene material, and having an edge which can be butt engaged on an abutment defined by the outer tank, said inner tank communicating with a liquid material inlet duct and a liquid material outlet duct and being provided with a cone-shaped bottom including an outlet opening for discharging therefrom the sediments toward the bottom of the outer tank.

### BRIEF DESCRIPTION OF THE DRAWINGS

Further characteristics and advantages of the invention will become more apparent thereinafter from the following detailed disclosure of an anaerobic system for processing waste water, according to the invention, and being illustrated, by way of an indicative, but not limitative, example, in the figures of the accompanying drawings, where:

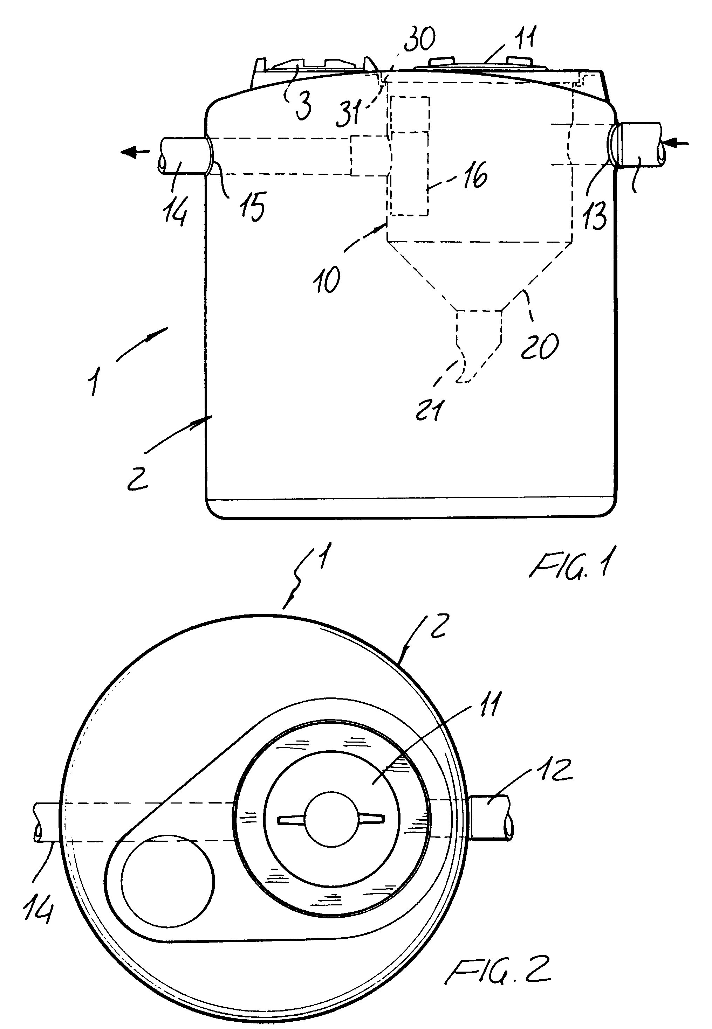

Figure 1 is an elevation view illustrating an anaerobic system for processing waste water according to the invention;
Figure 2 is a top plan view of the system according to the invention;

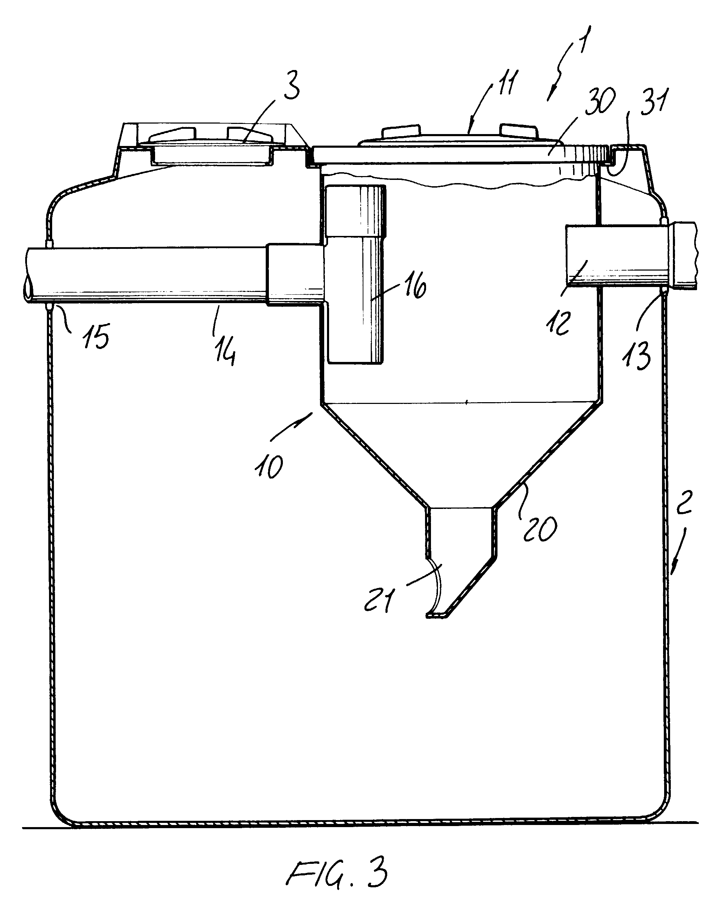

Figure 3 is a vertical cross-sectioned illustrating the subject system;

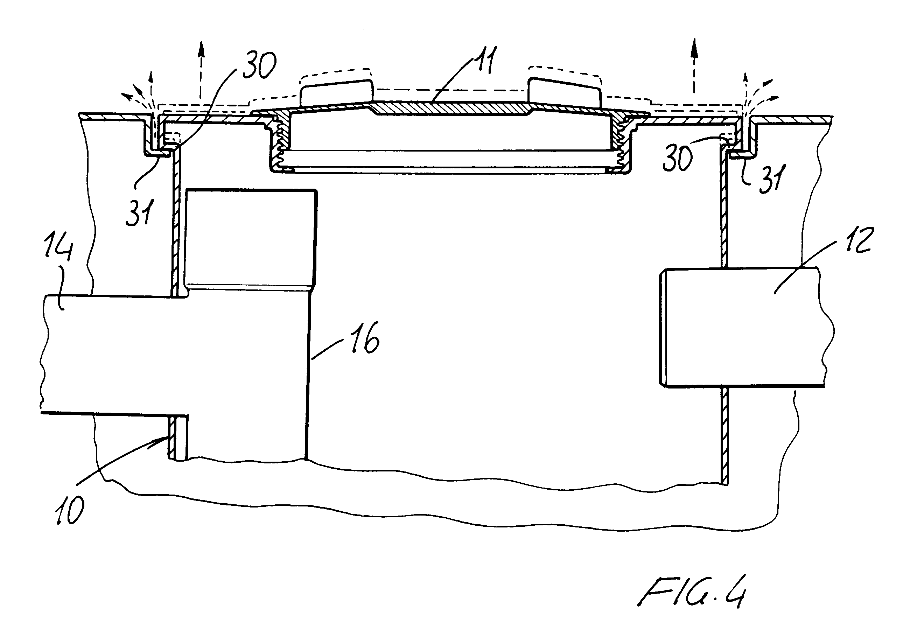

Figure 4 illustrates a detail of the coupling between the inner tank and the outer tank.

### DESCRIPTION OF THE PREFERRED EMBODIMENTS

With reference to the number references of the above mentioned figures, the anaerobic system for processing waste water according to the present invention, which has been generally indicated by the reference number 1, comprises an outer tank 2, made of a weldless polyethylene material, and obtained, for example, by means of a rotary molding method.

The outer tank 2, or digestor, is closed at the top thereof by a screw threaded plug, indicated by the reference number 3, allowing the elements for withdrawing the sediments to be introduced into said outer tank.

Inside the outer tank 2 is moreover provided an inner tank 10, also made of a weldless polyethylene material, by means of a rotary molding method, which inner tank 10 is closed by a threaded cover 11 and being coupled to a water delivery duct 12, tightly passing, by means of a gasket 13, through the wall of the outer tank 2, and being also coupled to a sewage discharging duct 14 which, through a second gasket 15, tightly passes through the wall of the outer tank 2.

At the end portions of the duct 14, is provided a T fitting 16, allowing to discharge the water even in a case of possible jammings.

As shown, the inner tank 10, or sedimenting tank, is provided at the bottom thereof with a cone-shape bottom 20, conveying the sediments toward an outlet opening 21, which is laterally open thereby it is not affected by the raising generated gases.

A further main feature of the present invention is that the tank 10 is moreover provided with an edge 30 which can be abutted on an abutment 31 correspondingly defined by the outer tank 2 so as to allow, by a small upwardly displacement, possible pressurized gases for exiting the tank.

In this connection it should be pointed out that conventional condensate material will provide, under normal operating conditions, a tightness gasket, thereby non noxious odor will be directed to the outside environment.

From the above disclosure it should be apparent that the invention fully achieves the intended aim and objects.

In particular, the fact is to be pointed out that a waste water processing system has been provided which, being made of a recycled or recyclable material such as polyethylene, will be provided with optimum mechanical characteristics.

Moreover, the specifically provided making method, i.e. a rotary molding method, will provide an article of manufacture of very good evenness, without the need of performing welding operations and the like.

In practicing the invention, the used materials, provided that they are compatible to the intended application, as well as the contingent size and shapes, can be any, depending on requirements.

## Claims

1. An anaerobic system for processing waste water, characterized in that said system comprises an outer tank, made of a weldless polyethylene material, in which is arranged an inner tank also made of a weldless polyethylene material, and having an edge which can be butt engaged on an abutment defined by the outer tank, said inner tank communicating with a liquid material inlet duct and a liquid material outlet duct and being provided with a cone-shaped bottom including an outlet opening for discharging therefrom the sediments toward the bottom of the outer tank.

2. An system according to Claim 1, characterized in that said outer tank and said inner tank are made by means of a rotary molding method.

3. A system according to Claims 1 and 2, characterized in that the sediment discharging opening is laterally opened so as to prevent possible generated gases and sediments from raising toward the inner tank.

4. A system according to one or more of the preceding claims, characterized in that said edge can be moved away from said abutment under a gas pressure for causing generated gas to be discharged to the outside environment.

5. A system according to one or more of the preceding claims, characterized in that in said system operatively generated condensate material provides a tightness gasket between said edge and said abutment.
